# EUROPÄISCHE PATENTSCHRIFT

(11) **EP 3 259 383 B1**
(45) Veröffentlichungstag und Bekanntmachung des Hinweises auf die Patenterteilung: **02.10.2019**
(21) Anmeldenummer: 16705172.1
(22) Anmeldetag: 18.02.2016
(51) Int. Cl.: C25D 3/56, C25D 3/60, C25D 5/50, C22C 13/00, C09D 1/00, C09D 5/10, C22C 19/03

(54) **ZINN-NICKEL-SCHICHT MIT HOHER HÄRTE**
TIN-NICKEL LAYER WITH HIGH VALUE OF HARDNESS
COUCHE DE TIN-NICKEL À HAUTE DURETÉ

(30) Priorität: 18.02.2015 DE 102015202910
(43) Veröffentlichungstag der Anmeldung: 27.12.2017
(73) Patentinhaber: Dr.Ing. Max Schlötter GmbH & Co. KG, 73312 Geislingen (DE)
(72) Erfinder: FUNK, Martin, 73431 Aalen (DE); FREUDENBERGER, Renate, 71409 Schwaikheim (DE); HEITMÜLLER, Sebastian, 73326 Deggingen-Reichenbach (DE); JORDAN, Manfred, 73084 Salach (DE)
(74) Vertreter: Hoffmann Eitle
(86) Internationale Anmeldenummer: PCT/EP2016/053452
(87) Internationale Veröffentlichungsnummer: WO 2016/131916

(56) Entgegenhaltungen:
- JP-A- H0 734 296
- JP-A- 2011 007 220
- JP-A- 2014 227 602

## Beschreibung

Die vorliegende Erfindung betrifft eine Zinn-Nickel-Schicht mit hoher Härte, ein Verfahren zu deren Herstellung und ein beschichtetes Bauteil, das als Beschichtung eine solche Zinn-Nickel-Schicht umfasst.

Harte Chromschichten, im Folgenden Hartchromschichten, werden für viele technische Anwendungen verwendet. Sie zeichnen sich durch eine hohe Härte sowie gute tribologische Eigenschaften wie einem geringen Verschleiß sowie einer niedrigen Reibung aus. Des Weiteren weisen Hartchromschichten gute antiadhäsive Eigenschaften, eine hohe Korrosionsbeständigkeit und eine gute mechanische Bearbeitbarkeit auf.

Hartchromschichten werden in der Regel elektrolytisch (galvanisch) aus Chromsäureelektrolyten mit Chromsäure (zum Beispiel 250 g/l), geringen Mengen an Schwefelsäure (zum Beispiel 0,5 Gew-%) und Hexafluorkieselsäure (zum Beispiel 1,5 bis 4 g/l) abgeschieden. Die abgeschiedenen Schichtdicken liegen üblicherweise im Bereich von 5 bis 20 µm, für spezielle Anwendungen können aber auch bis zu 150 µm dicke Schichten abgeschieden werden.

Hartchromschichten lassen sich mechanisch durch Schleifen, Drehen, Fräsen und ähnliche Verfahren bearbeiten. Bauteile können daher zunächst über die geforderte Schichtdicke hinaus verchromt und anschließend durch mechanische Bearbeitung gleichmäßig auf das gewünschte Endmaß gebracht werden. Verschlissene Chromschichten können ohne Angriff auf das Grundmaterial wieder abgelöst werden, sodass eine Reparatur von hartverchromten Bauteilen möglich ist.

Problematisch ist jedoch, dass die für die elektrolytische Abscheidung benötigte Chromsäure im Sinne der Gefahrstoffverordnung als sehr giftig und krebserregend (Kategorie I) eingestuft ist. Dasselbe gilt für alternativ einsetzbare Chrom(VI)-Verbindungen wie zum Beispiel Chromtrioxid. Aufgrund dieser Eigenschaften wurde Chromsäure in den Anhang XIV der Verordnung 1907/2006/EG (sogenannte REACH-Verordnung) aufgenommen, wodurch dessen Verwendung künftig erheblich erschwert wird. Somit besteht ein großer Bedarf an Alternativlösungen für die Abscheidung von Hartchromschichten aus Chromsäureelektrolyten.

Eine naheliegende Alternative ist die Chromabscheidung aus einem Chromelektrolyten auf Basis von Chrom(III)-Salzen. Diese Verbindungen sind nicht so giftig und auch nicht als krebserregend eingestuft. Chrom(III)-Elektrolyte sind seit etwa 1970 bekannt und werden auch - in begrenztem Umfang - technisch eingesetzt. Nachteilig war bei den Verfahren der ersten Generation, die auf der Verwendung von Chrom(III)-Chlorid basierten, dass im Vergleich zu den konventionellen Chromsäureelektrolyten deutlich dunklere Chromschichten erhalten wurden. Zwischenzeitig ist es zwar gelungen, Verfahren auf der Basis von Chrom(III)-Sulfat zu entwickeln, die diesen dekorativen Nachteil überwinden, da sich die aus Chrom(III)-Sulfatelektrolyten abgeschiedenen Schichten optisch kaum noch von den aus Chromsäurebädern abgeschiedenen Schichten unterscheiden. Jedoch können mit den Verfahren auf Basis von Chrom(III)-Chlorid oder Chrom(III)-Sulfat nur sehr dünne Schichten von maximal 0,5 µm gleichmäßig auf dem gesamten Werkstück abgeschieden werden. Der Mechanismus, der zu dieser Begrenzung der Schichtdicke führt, ist nicht bekannt. Es wird diskutiert, dass die Abscheidung von Cr³⁺-Ionen zu metallischem Chrom über das instabilere Cr²⁺ als Zwischenstufe verläuft.

In der EP 2 054 539 B1 wird vorgeschlagen, den Anoden- und Kathodenraum durch eine Anionenaustauschermembran zu trennen, wodurch verhindert wird, dass an der Kathode gebildete Cr²⁺-Ionen zur Anode gelangen und dort wieder zu Cr³⁺-Ionen oxidiert werden. Durch dieses Verfahren sollen Schichtdicken von mehr als 10 µm erreicht werden und die erhaltenen Schichten als Hartchromschichten Verwendung finden können.

In der WO 2012/059473 A1 wird ein Verfahren zur Abscheidung von Hartchromschichten aus Cr(VI)-freien Elektrolyten beschrieben. Die Elektrolytlösung enthält Cr(II)- oder Cr(III)-Verbindungen oder Mischungen davon und Halogenidverbindungen, die das an der Anode gebildete freie Halogen (insbesondere Brom oder Iod), unter Komplexbildung abfangen und so die Oxidation der Cr(II)- und Cr(III)-Verbindungen verhindern. Die Abscheidung von mindestens 10 µm dicken Chromschichten mit Vickers-Härten von bis zu HV 1630 soll hierdurch möglich sein.

Die WO 2014/111624 A1 beschreibt ein Verfahren, das aus der Abscheidung einer Schichtenkombination aus einer Nickel-Phosphor-Legierung und einer darauf aus einem auf Chrom(III)-Verbindungen basierenden Chromelektrolyten abgeschiedenen Chromschicht besteht. Es können hierbei Vickers-Härten von HV 2000 und mehr erreicht werden.

Trotz der im Stand der Technik beschriebenen Verfahren zur Hartchromabscheidung aus Chromelektrolyten auf Basis von Chrom(III)-Verbindungen, kommen diese Verfahren in der Technik kaum zum Einsatz. Offenbar können die notwendigen Verfahrensparameter im praktischen Betrieb nicht genau genug kontrolliert werden, um reproduzierbar dicke Hartchromschichten abscheiden zu können.

Als Alternative zur Hartchrombeschichtung kann das thermische Spritzen von Keramikmaterialien zum Einsatz kommen. Verfahrensbedingt können hierbei jedoch nur Außenflächen des zu beschichtenden Werkstücks beschichtet werden. Bei der galvanischen Hartchrombeschichtung aus Chromsäureelektrolyten können durch den Einsatz von Hilfsanoden auch Innenflächen von Bauteilen beschichtet werden. Da durch das thermische Spritzen zunächst nur sehr raue Schichten abgeschieden werden, ist eine aufwändige mechanische Nachbearbeitung notwendig, die bei den aufgespritzten keramischen Schichten oftmals sehr schwierig ist. Durch thermisches Spritzen aufgebrachte Schichten sind oft spröde und zeigen dadurch trotz sehr hoher Härtewerte nur schlechte tribologische Eigenschaften.

Ferner können durch Vakuumverfahren wie PVD (Physical Vapor Deposition) oder CVD (Chemical Vapor Deposition) Hartchromalternativen wie Titannitrid (TiN), Wolframcarbid (WC) oder Zirkoniumnitrid (ZrN) abgeschieden werden. Die Abscheiderate dieser Verfahren ist sehr gering, sodass nur geringe Schichtdicken abgeschieden werden können. Diese Verfahren sind wegen des hohen apparativen Aufwandes nur für Spezialanwendungen (Nischentechnologie) als Alternative zur Hartverchromung anzusehen.

Es besteht somit weiterhin ein großer Bedarf an Alternativen zur Hartchromabscheidung.

Zinn-Nickel-Schichten mit einer Zusammensetzung von ca. 65 Gew-% Sn und ca. 35 Gew-% Ni zeigen eine hohe Korrosionsbeständigkeit und erfüllen in diesem Punkt eine wichtige Eigenschaft von Hartchromschichten. Verfahren auf Basis von Zinn-Nickel-Elektrolyten zeichnen sich auch dadurch aus, dass das Legierungsverhältnis ca. 65 Gew-% Sn und ca. 35 Gew-% Ni unabhängig von der am Bauteil angelegten kathodischen Stromdichte ist. Die Verfahren zeigen auch eine gute Streufähigkeit, sodass auch geometrisch komplexe Bauteile gleichmäßig beschichtet werden können. Herkömmliche Zinn-Nickel-Schichten weisen jedoch nur eine geringe Härte von ca. HV 450 bis 500 (Vickers-Härte) auf und können somit nicht als Alternative für Hartchromschichten dienen.

JP 2014-227602 A befasst sich mit Folien zur Abschirmung von elektromagnetischer Strahlung. Auf einer Metallfolie wird zunächst eine dünne Grundschicht aus Nickel gebildet, welche die Diffusion von Metallatomen in die darauf angeordnete Schicht aus einer Zinn-Legierung unterbinden soll. Die Schicht aus der Zinn-Legierung kann aus Zinn, Nickel und ggf. weiteren Elementen (P, W, Fe, Co, Zn, C, S, O) mit einem Anteil von 1 bis 40 Gew-% bestehen. Die Schicht aus der Zinn-Legierung kann durch Aufdampfen gebildet werden. Sie weist eine Dicke von 0,03 bis 1,5 µm auf.

In JP H07-34296 A wird ein NiSn-Legierungsfilm zum Auskleiden einer Metallform beschrieben. Der NiSn-Legierungsfilm wird zusammen mit Partikeln eines fluorhaltigen Polymers mit einem Durchmesser von 2 bis 8 µm galvanisch abgeschieden. Der erhaltene Film kann im Anschluss im Vakuum bei 270 bis 370°C erhitzt werden. In den Beispielen wird für eine PTFE-haltige Zinn-Nickel-Schicht mit einer Schichtdicke von 10 µm eine Härte von HV 460 beschrieben.

JP 2011-007220 A befasst sich mit einem Kugelventil, für das eine Kugel aus Kupfer mit einer dünnen Zinn-Nickel-Schicht galvanisch beschichtet wird. Die Zinn-Nickel-Schicht soll eine hohe Gleitfähigkeit aufweisen. Die Schichtdicke beträgt 0,5 bis 3 µm.

Der vorliegenden Erfindung liegt somit die Aufgabe zugrunde, Alternativen zu Hartchromschichten bereitzustellen, die die oben genannten Nachteile des Standes der Technik überwinden. Weitere Aufgaben sind es, ein Herstellungsverfahren hierfür sowie ein beschichtetes Bauteil, das als Beschichtung eine solche Schicht aufweist, bereitzustellen.

Diese Aufgaben werden durch die Zinn-Nickel-Schicht, das Verfahren zu deren Herstellung und das beschichtete Bauteil, umfassend als Beschichtung eine solche Zinn-Nickel-Schicht, nach den unabhängigen Ansprüchen gelöst. Abhängige Ansprüche geben weitere vorteilhafte Ausgestaltungen an.

Die Erfindung beinhaltet eine Zinn-Nickel-Schicht mit einer NiSn-Phase, wobei die Zinn-Nickel-Schicht eine Härte von mindestens HV 750 (Vickers-Härte) und eine Schichtdicke von 5 bis 250 µm aufweist.

Die erfindungsgemäße Zinn-Nickel-Schicht weist somit eine deutlich höhere Härte als herkömmliche Zinn-Nickel-Schichten auf. Des Weiteren kann sie gegenüber herkömmlichen Zinn-Nickel-Schichten signifikant verbesserte tribologische Eigenschaften aufweisen, die sich insbesondere in niedrigeren Reibungszahlen äußern. Je niedriger die Reibungszahl ist, desto geringer ist der Verschleiß der Schicht. Darüber hinaus zeigt sie aufgrund der Zinn/Nickel-Zusammensetzung eine sehr hohe Korrosionsbeständigkeit und kann auch auf geometrisch komplexen Substraten (Bauteilen) sehr gleichmäßig erzeugt werden. Hierfür können beispielsweise galvanische Verfahren eingesetzt werden. Somit stellt die erfindungsgemäße Zinn-Nickel-Schicht eine technisch wertvolle Alternative zu Hartchromschichten dar.

Die Erfinder fanden überraschend heraus, dass die erfindungsgemäßen Zinn-Nickel-Schichten durch das unten näher beschriebene Verfahren, das ein Tempern einer galvanisch abgeschiedenen Zinn-Nickel-Schicht bei mindestens 200°C, insbesondere mindestens 380°C, umfasst, hergestellt werden können. Diese Feststellung war deswegen überraschend, weil Zinn-Nickel-Schichten in der Regel als einheitliche NiSn-Phase, also mit einem Molverhältnis von Nickel zu Zinn von 1:1 galvanisch abgeschieden werden. Die Abscheidung erfolgt üblicherweise in einer einphasigen und somit definierten Struktur und führt zu einer sehr gleichmäßigen Zusammensetzung der Schicht. Da eine solche Zinn-Nickel-Schicht bereits eine definierte Struktur, besagte NiSn-Phase, aufweist, würde man nicht erwarten, dass durch Tempern die Härte der Zinn-Nickel-Schicht sowie dessen tribologische Eigenschaften signifikant verbessert werden können.

Eine Verbesserung der Härte wurde beispielsweise bei stromlos abgeschiedenen Nickel-Phosphor-Schichten gefunden, die zunächst - ganz im Gegensatz zu Zinn-Nickel-Schichten - in amorpher Form abgeschieden werden. Durch eine Wärmebehandlung, zum Beispiel zwischen 300°C und 600°C, kommt es zur Ausbildung von kristallinen Ni₃P-Phasen, von denen angenommen wird, dass diese für eine Härtesteigerung auf Härtewerte von bis zu HK 1000 (Knoop-Härte) verantwortlich sind.

Da Zinn-Nickel-Schichten, wie oben ausgeführt, bereits in einer definierten Phase galvanisch abgeschieden werden, bestand für einen Fachmann bislang keinerlei Veranlassung für die Annahme, dass das Tempern einer Zinn-Nickel-Schicht zu einer signifikanten Verbesserung der Härte und auch der tribologischen Eigenschaften führen könnte.

Die erfindungsgemäße Zinn-Nickel-Schicht weist eine NiSn-Phase auf und ist mittels galvanischer Abscheidung und anschließendem Tempern, wie unten näher beschrieben, erhältlich. Nach dem galvanischen Abscheiden beträgt das Molverhältnis von Nickel zu Zinn 1:1, was 67 Gew-% Zinn und 33 Gew-% Nickel, bezogen auf den Gesamtgehalt an Zinn und Nickel, entspricht (Gew-% = Gewichtsprozent). Das Tempern wird vorzugsweise so durchgeführt, dass eine Diffusion von Zinn bzw. Nickel aus der Schicht vermieden wird und somit auch in der finalen Zinn-Nickel-Schicht ein Molverhältnis von Nickel zu Zinn von 1:1 vorliegt. Das Tempern kann hierzu bei einer Temperatur von 200°C bis 750°C, bevorzugt 380°C bis 650°C durchgeführt werden. Das Tempern kann 20 bis 240 min, insbesondere 25 bis 200 min, dauern.

Die Zusammensetzung der Zinn-Nickel-Schicht wird per Röntgenfluoreszenzanalyse mit einem Fischerscope X-Ray Röntgenfluoreszenzmessgerät XDAL gemäß DIN EN ISO 3497 bestimmt. Die Messgenauigkeit ist ± 2 Gew-% oder besser.

Die Zinn-Nickel-Schicht kann vollständig aus Zinn und Nickel und gegebenenfalls unvermeidbaren Verunreinigungen, die aus dem verwendeten Galvanikbad stammen, bestehen. Es ist jedoch möglich, dass durch das Tempern weitere Elemente in die Zinn-Nickel-Schicht gelangen. Beispielsweise können Atome aus einem etwaigen Substrat in die Zinn-Nickel-Schicht diffundieren. Es ist auch möglich, dass beim Tempern Atome aus der Atmosphäre in die Zinn-Nickel-Schicht gelangen.

Die Zinn-Nickel-Schicht weist eine Härte von mindestens HV 750 auf. Die Zinn-Nickel-Schicht kann insbesondere eine Härte im Bereich von HV 800 bis 1050, zum Beispiel im Bereich von HV 850 bis 1000 oder im Bereich von HV 850 bis 950, aufweisen. Im Rahmen dieser Anmeldung wird die Vickers-Härte gemäß DIN EN ISO 4516 bestimmt. Details hierzu sind unten bei den Methoden beschrieben.

Wie oben bereits erwähnt, kann die hohe Härte der erfindungsgemäßen Zinn-Nickel-Schichten auf eine Temperung zurückgeführt werden. Härten von HV 900 können beispielsweise ohne weiteres mit einer einstündigen Wärmebehandlung in einem Bereich von 400°C bis 520°C erhalten werden. Die Erfinder vermuten, dass die Ausbildung weiterer definierter Phasen während des Temperns für die Härtesteigerung der Zinn-Nickel-Schichten mitverantwortlich ist. So können gegebenenfalls im Röntgendiffraktogramm einer getemperten Zinn-Nickel-Schicht neben der ursprünglichen NiSn-Phase neue Reflexe beobachtet werden, denen eine Zusammensetzung von SnO₂ bzw. Ni₄₈Sn₅₂ zugeordnet werden konnte.

Die Zinn-Nickel-Schicht kann somit neben einer NiSn-Phase weitere Phasen, die aus SnO₂ und/oder Ni₄₈Sn₅₂ ausgewählt sind, aufweisen.

Üblicherweise wird die Zinn-Nickel-Schicht bei ihrer Herstellung auf ein Substrat, zum Beispiel ein Bauteil, galvanisch abgeschieden. Ein solches Substrat kann beispielsweise ein oder mehrere Metalle und/oder eine oder mehrere Metalllegierungen enthalten oder ganz daraus bestehen. Das Substrat kann vorzugsweise Stahl, Kupfer oder Messing umfassen oder ganz daraus bestehen. Beispiele für solche Substrate sind beispielsweise Bleche aus Stahl, Kupfer oder eben Messing.

Gemäß einer Weiterbildung dieser Ausführungsform enthält das Substrat Kupfer. Es kann auch ganz aus Kupfer bestehen. In der Zinn-Nickel-Schicht können sich beim Tempern auch kupferhaltige Phasen, zum Beispiel eine NiCuSn-Phase ausbilden, wie es im Röntgendiffraktogramm einer solchen Schicht nachgewiesen werden konnte. Die Zinn-Nickel-Schicht kann somit eine NiCuSn-Phase enthalten. Auf kupferhaltigen Substraten abgeschiedene Zinn-Nickel-Schichten können nach dem Tempern eine hohe Härte von um die HV 900 (Vickers-Härte) und mitunter höher aufweisen.

Falls gewünscht, kann eine Diffusion von Kupferatomen in die Zinn-Nickel-Schicht unterbunden werden, indem zwischen Substrat und Zinn-Nickel-Schicht eine Diffusionsbarriere aus Nickel erzeugt wird. Diese kann beispielsweise durch chemisches oder galvanisches Abscheiden von Nickel erzeugt werden.

Wenn die Zinn-Nickel-Schicht auf einem Substrat ausgebildet ist, so bildet sie in der Regel die Endoberflächenschicht. Eine Endoberflächenschicht stellt die äußerste Schicht an der Oberfläche dar, auf der keine weitere Schichte erzeugt ist. Die Zinn-Nickel-Schicht stellt also demnach analog zur üblichen Verwendung einer Hartchromschicht eine harte, äußerste Oberflächenschicht dar.

Wie oben bereits erwähnt, weisen galvanische Abscheidungsverfahren für Zinn-Nickel-Schichten eine gute Streufähigkeit auf, sodass auch geometrisch komplexe Substrate gleichmäßig beschichtet werden können. Ein besonderer Vorteil der erfindungsgemäßen Zinn-Nickel-Schicht ist, dass diese mit nahezu beliebiger Schichtdicke galvanisch abgeschieden werden kann. Die Zinn-Nickel-Schicht weist, insbesondere wenn sie für einen ähnlichen Verwendungszweck wie eine Hartchromschicht eingesetzt wird, eine Schichtdicke von 250 µm oder weniger, nämlich 5 bis 250 µm, auf. Die Schichtdicke kann insbesondere im Bereich von 5 bis 200 µm, bevorzugt im Bereich von 5 bis 150 µm, liegen. Die Schichtdicke wird mittels Röntgenfluoreszenzanalyse gemäß DIN EN ISO 3497 bestimmt.

Als weiterer Aspekt der Erfindung wird ein Verfahren zur Herstellung der oben beschriebenen Zinn-Nickel-Schichten angegeben. Das erfindungsgemäße Verfahren umfasst:
(A) galvanisches Abscheiden einer Zinn-Nickel-Schicht mit einer NiSn-Phase und einer Schichtdicke von 5 bis 250 µm, und
(B) Tempern der abgeschiedenen Zinn-Nickel-Schicht bei mindestens 200°C, sodass die Zinn-Nickel-Schicht eine Härte von mindestens HV 750 aufweist.

Im Rahmen dieser Anmeldung werden galvanisch abgeschiedene, jedoch noch nicht getemperte Zinn-Nickel-Schichten auch als "abgeschiedene Zinn-Nickel-Schicht" bezeichnet. Durch das Tempern einer solchen abgeschiedenen Zinn-Nickel-Schicht im Schritt (B) wird dann eine erfindungsgemäße Zinn-Nickel-Schicht mit einer Härte von mindestens HV 750 (Vickers-Härte) erhalten. Das Verfahren ermöglicht einen leichten Zugang zu den erfindungsgemäßen Zinn-Nickel-Schichten mit hoher Härte.

Durch das erfindungsgemäße Verfahren werden die oben beschriebenen erfindungsgemäßen Zinn-Nickel-Schichten erhalten. Demnach haben die oben gemachten Ausführungen zu den Zinn-Nickel-Schichten auch für das erfindungsgemäße Verfahren Geltung. Das galvanische Abscheiden kann auf einem Substrat, das ein oder mehrere Metalle und/oder ein oder mehrere Metalllegierungen umfasst oder daraus besteht, erfolgen. Das Substrat umfasst bevorzugt Stahl, Kupfer oder Messing oder es besteht hieraus. In der Regel bildet die Zinn-Nickel-Schicht die Endoberflächenschicht auf dem Substrat. Die Zinn-Nickel-Schichten werden mit einer Schichtdicke von 250 µm oder weniger, nämlich mit einer Schichtdicke im Bereich von 5 bis 250 µm, insbesondere 5 bis 200 µm, bevorzugt 5 bis 150 µm, abgeschieden. Durch das Tempern weist die Zinn-Nickelschicht eine Härte von mindestens HV 750 auf. Beim Tempern können sich neben der NiSn-Phase eine oder mehrere der oben beschriebenen Phasen bilden. Wird die Zinn-Nickel-Schicht auf einem Substrat abgeschieden, so wird sie in der Regel mit dem Substrat zusammen getempert. Nach dem galvanischen Abscheiden beträgt das Molverhältnis von Nickel zu Zinn 1:1, was 67 Gew-% Zinn und 33 Gew-% Nickel, bezogen auf den Gesamtgehalt an Zinn und Nickel, entspricht. Bevorzugt wird das Tempern so durchgeführt, dass eine Diffusion von Zinn bzw. Nickel aus der Schicht vermieden wird und somit auch in der finalen Zinn-Nickel-Schicht ein Molverhältnis von Nickel zu Zinn von 1:1 vorliegt.

Die Zinn-Nickel-Schicht wird im Schritt (A) als einheitliche NiSn-Phase abgeschieden. Beim Tempern können, wie oben beschrieben, weitere Phasen in der Zinn-Nickel-Schicht entstehen. Es können durch das Tempern auch weitere Elemente, beispielsweise aus einem Substrat oder aus der Atmosphäre, in die Zinn-Nickel-Schicht gelangen.

Dem Tempern der abgeschiedenen Zinn-Nickel-Schicht kommt, wie oben bereits erwähnt, eine besondere Bedeutung bei der Verbesserung der Härte und, je nach Verfahrensführung, der tribologischen Eigenschaften der Zinn-Nickel-Schicht zu. Hierfür kann im Schritt (B) bei den angegebenen Temperaturen für mindestens 20 min getempert werden. In der Regel dauert das Tempern nicht länger als 240 min. Es kann insbesondere für 25 bis 200 min, bevorzugt für 30 bis 120 min, besonders bevorzugt für 35 bis 90 min, zum Beispiel für etwa 1 Stunde, bei den angegebenen Temperaturen getempert werden.

Bei einer Temperung bei 200°C, insbesondere mindestens 300°C, für beispielsweise 120 min oder 180 min wird bereits eine signifikante Härtesteigerung im Vergleich zu nicht getemperten Zinn-Nickel-Schichten beobachtet. Jedoch ist eine Verbesserung der tribologischen Eigenschaften meist nur moderat. Bei Temperaturen von 380°C und mehr konnten verbesserte Härten und auch deutlich verbesserte tribologische Eigenschaften beobachtet werden. Es besteht also bei den Zinn-Nickel-Schichten keine unmittelbare Korrelation zwischen hoher Härte und guten tribologischen Eigenschaften. Zum Tempern im Schritt (B) wird daher bevorzugt eine Temperatur von mindestens 380°C eingesetzt. Bei zu hohen Temperaturen kann die Härte wieder etwas sinken, sodass die Härte niedriger als bei den besonders bevorzugten Bedingungen ist. Das Tempern wird bevorzugt bei Temperaturen von 750°C und weniger, insbesondere 650°C und weniger, durchgeführt.

Es kann insbesondere bei einer Temperatur im Bereich von 390°C und 550°C, bevorzugt 400°C bis 520°C, besonders bevorzugt 400°C bis 450°C, getempert werden. Besonders vorteilhafte Zinn-Nickel-Schichten ergeben sich, wenn eine Kombination aus bevorzugter Zeitdauer und bevorzugter Temperatur für das Tempern eingesetzt wird. Falls zu kurz und/oder bei zu niedriger Temperatur getempert wird, werden eine niedrigere Härte bzw. schlechtere tribologische Eigenschaften erhalten.

Das Tempern kann, muss aber nicht unter Schutzgas durchgeführt werden. Vielmehr hat es sich gezeigt, dass ein Tempern in einer sauerstoffhaltigen Atmosphäre, insbesondere an Luft, sich vorteilhaft auf die Härte bzw. die tribologischen Eigenschaften der Zinn-Nickel-Schicht auswirken kann. So können sich beispielsweise eine oder mehrere SnO₂-Phasen ausbilden.

Für das galvanische Abscheiden der Zinn-Nickel-Schicht im Schritt (A) können dem Fachmann an sich bekannte Verfahren verwendet werden. Hierfür wird in der Regel eine Zinn-Ionen und Nickel-Ionen enthaltende Elektrolytlösung verwendet. Dies ermöglicht insbesondere ein gleichmäßiges Abscheiden auf Substraten, die ein oder mehrere Metalle und/oder ein oder mehrere Metalllegierungen enthalten oder daraus bestehen.

Eine solche Elektrolytlösung kann neben Zinn-Salzen, zum Beispiel ein Zinn(II)-Chlorid, und Nickel-Salzen, zum Beispiel ein Nickel(II)-Chlorid, auch Additive enthalten. Ein solches Additiv kann beispielsweise ein wasserlösliches Fluorsalz, insbesondere Ammoniumfluorid und/oder Natriumfluorid, sein. Es wird vermutet, dass Fluoridionen einen zweikernigen Komplex aus Zinn und Nickel stabilisieren, der für ein sehr konstantes Legierungsverhältnis der Zinn-Nickel-Schichten im Molverhältnis 1:1 sorgt.

Für eine galvanische Abscheidung eignet sich insbesondere ein saurer Elektrolyt mit 40 bis 60 g/l Zinn(II)-Chlorid Hexahydrat, 200 bis 300 g/l Nickel(II)-Chlorid Hexahydrat und 30 bis 50 g/l Fluoridionen, die als Ammoniumfluorid und/oder Natriumfluorid zugegeben werden. Die Konzentration an Nickel ist hierbei höher als die des Zinns, da es unedler ist.

Die galvanische Abscheidung erfolgt bevorzugt bei Temperaturen im Bereich von 60°C bis 70°C. Der pH-Wert des Elektrolyten beträgt bevorzugt 2,5 bis 3,5. Die zum Abscheiden verwendeten kathodischen Stromdichten liegen vorzugsweise im Bereich von 2 bis 4 A/dm². Es können so Abscheideraten von ca. 0,8 µm/min erreicht werden.

Mit dem erfindungsgemäßen Verfahren können Substrate oder Bauteile mit einer erfindungsgemäßen Zinn-Nickel-Schicht versehen werden. Somit wird auch ein Herstellungsverfahren für ein beschichtetes Bauteil bereitgestellt, das als Beschichtung eine der oben beschriebenen Zinn-Nickel-Schichten umfasst. Das Verfahren umfasst die Schritte:
(A) galvanisches Abscheiden einer Zinn-Nickel-Schicht mit einer NiSn-Phase und einer Schichtdicke von 5 bis 250 µm auf einem Bauteil, und
(B) Tempern des Bauteils mit der abgeschiedenen Zinn-Nickel-Schicht bei mindestens 200°C, insbesondere mindestens 300°C, bevorzugt mindestens 380°C und/oder höchstens 750°C, sodass die Zinn-Nickel-Schicht eine Härte von mindestens HV 750 aufweist.

Die Zinn-Nickel-Schicht wird somit in aller Regel als Endoberflächenschicht auf dem Bauteil gebildet.

Als weiterer Aspekt der Anmeldung wird ein beschichtetes Bauteil angegeben, das als Beschichtung eine Zinn-Nickel-Schicht nach zumindest einer der oben beschriebenen Ausführungsformen umfasst. Als Bauteil kann beispielsweise eines der oben beschriebenen Substrate verwendet werden. Das beschichtete Bauteil kann somit eine Kombination aus Substrat und Zinn-Nickel-Schicht umfassen oder daraus bestehen. Das Bauteil kann flächendeckend mit der Zinn-Nickel-Schicht beschichtet sein. Die Zinn-Nickel-Schicht kann insbesondere die Endoberflächenschicht auf dem Bauteil bilden.

### Beispiele

### Es wurden folgende Methoden verwendet:

Die Härtemessung erfolgte durch das Forschungsinstitut für Edelmetalle und Metallchemie (FEM), Schwäbisch Gmünd (Deutschland) nach der SOP 7 Met-0108: DIN EN ISO 4516 (Oktober 2002), Metallische und andere anorganische Überzüge, Mikrohärteprüfungen nach Vickers und Knoop. Im Rahmen der Anmeldung erfolgte die Bestimmung ausschließlich nach Vickers bei Schichtdicken < 15 µm am Querschliff und bei Schichtdicken < 80 µm an Oberflächen.

Die Angabe der Vickers-Härte erfolgt durch das Formelzeichen "HV". Hinter dem Härtewert werden folgende Prüfbedingungen angegeben:
a) Die Prüfkraft in Newton (N) (multipliziert mit einem Proportionalitätsfaktor von 0,102, und
b) die Einwirkdauer in Sekunden (s), sofern sie von 10 bis 15 Sekunden abweicht.

Beispiel 1: 640 HV0,1: Vickers-Härte 640, bestimmt mit einer Prüfkraft von 0,9807 N, die 10 bis 15 s einwirkte.
Beispiel 2: 640 HV0,1/20: Vickers-Härte 640, bestimmt mit einer Prüfkraft von 0,9807 N, die 20 s einwirkte.

Aus der Norm DIN EN ISO 4516 (Oktober 2002) ergibt sich, dass die Vickers-Härte dimensionslos angegeben wird. Die verwendete Prüfkraft geht bei der Bestimmung der Vickers-Härte unmittelbar in den Härtewert mit ein, sodass auch Härtewerte, die bei unterschiedlichen Prüfkräften gemessen wurden, direkt miteinander verglichen werden können.

Die Untersuchungen zur Tribologie wurden mit dem Prüfgerät CSEM Tribometer Pin-Disc-Machine durchgeführt. Der Gegenkörper war eine Kugel mit einem Durchmesser von 6 mm der Legierung 100 Cr6, Werkstoffnummer 1.3505.

### Parameter für die Tribologiemessung:

Normalkraft: 5 N
Drehzahl: 500 min⁻¹
Gleitgeschwindigkeit: 52,4 mm/s
Temperatur: 23 ± 2°C
rel. Feuchte: 50 ± 6%
Umdrehungen: 10.000

Röntgenbeugungsuntersuchungen wurden an einem Röntgendiffraktometer D8 GADDS der Fa. Bruker AXS durchgeführt. Der Cu-K_{λ}-Primärstrahl wurde mit einem Göbelspiegel parallel ausgerichtet und durch 1 mm Kollimator und Ringblende für eine ortsaufgelöste Messung begrenzt. Die Detektion erfolgte mit einem 2-dimensionalen Detektor Vantec 500.

Die Schichtdickenmessung erfolgte mit einem Fischerscope X-Ray Röntgenfluoreszenzmessgerät XDAL gemäß DIN EN ISO 3497.

Die Analyse der Zusammensetzung der Legierungen erfolgte ebenfalls per Röntgenfluoreszenzanalyse mit dem vorstehend genannten Gerät gemäß DIN EN ISO 3497. Die Messwerte werden mit einer Genauigkeit von ± 2 Gew-% oder besser erhalten.

Für die nachfolgenden Beispiele 1 und 2 sowie das Vergleichsbeispiel 1 wurden Messingbleche der Abmessung 50 × 50 × 5 mm als Substrate verwendet. Diese wurden in einem wässrigen, alkalischen Reiniger gereinigt und anschließend in einer sauren Lösung aus Natriumperoxodisulfat in Schwefelsäure angebeizt. Die Vorbehandlung erfolgte wie folgt:

### 1) Alkalische Ultraschall-Entfettung in Entfetter Slotoclean AK 160:

Ansatz mit 30 g/l Entfettersalz Slotoclean AK 161, bei 60°C für 1 Minute.

Spülen mit destilliertem Wasser.

### 2) Kathodische Entfettung in Reiniger Slotoclean DCG-F:

Ansatz mit 60 ml/l Entfetterkonzentrat Slotoclean DCG-F, bei 20°C für 1 Minute.

Spülen mit destilliertem Wasser.

### 3) Anbeizen in Kupferaktivierung S 40:

Ansatz mit 100 g/l Kupfersalz S 40 und 100 ml/l Schwefelsäure der Dichte 1,84 g/cm³,
bei 20°C für 10 Sekunden bis 1 Minute, je nach Grundmaterial.

Spülen mit destilliertem Wasser.

Slotoclean AK 161, Slotoclean DCG-F und Kupfersalz S 40 sind Produkte der Fa. Dr.-Ing. Max Schlötter.

### Beispiel 1:

Auf ein so vorbehandeltes Messingblech wurde aus einem Zinn-Nickel-Elektrolyten bei einer Stromdichte von 1 A/dm² und einer Abscheidedauer von 120 Minuten eine 40 µm dicke Zinn-Nickel-Schicht galvanisch abgeschieden. Hierfür wurde mit einem Zinn-Nickel-Legierungselektrolyten SLOTOLOY NIT 10 der Fa. Dr.-Ing. Max Schlötter beschichtet.

### Der Ansatz enthält:

48 g/l Zinn(II)-Chlorid-Hexahydrat
243 g/l Nickel(II)-Chlorid-Hexahydrat
250 ml/l Zusatz SLOTOLOY NIT 11

Der Zusatz SLOTOLOY NIT 11 ist ein Handelsprodukt der Fa. Dr.-Ing. Max Schlötter.

Elektrolyttemperatur: 65°C
Stromdichte: 1 A/dm²
Abscheidedauer: 120 Minuten
Zusammensetzung der abgeschiedenen Schicht: 65 ± 2 Gew-% Zinn und 35 ± 2 Gew-% Nickel
Schichtdicke: 40 µm

Von der so abgeschiedenen Zinn-Nickel-Schicht wurde die Mikrohärte nach Vickers mit einem Mikrohärtetester gemessen. Direkt nach der Abscheidung wurde ein Wert von 630 HV0,02 gemessen.

Die Probe wurde anschließend für 1 Stunde bei 500°C ohne Schutzgas getempert und anschließend die Härtebestimmung wiederholt. Der Wert betrug dabei 920 HV0,02.

### Beispiel 2:

Es wurde auf einem Messingblech eine Zinn-Nickel-Schicht mit einer stark texturierten Struktur abgeschieden. Im Röntgendiffraktogramm war nur ein Reflex zu erkennen, nämlich der Reflex einer einheitlichen NiSn-Phase.

Die Probe wurde dann in situ in Schritten von jeweils 50°C bis auf 500°C erhitzt, wobei die Intervalldauer bis zur jeweils nächsten Temperatur 25 min betrug. Bis 300°C ist keine Phasenänderung zu erkennen. Ab 400°C treten im Diffraktogramm neue Reflexe auf. Diese neue Phase konnte als Zinnoxid (SnO₂) identifiziert werden. Es wurden weitere neue Reflexe registriert, die einer neu entstandenen Phase Ni₄₈Sn₅₂ zugeordnet werden konnten.

### Vergleichsbeispiel 1:

Als Vergleichsbeispiel dient die Herstellung einer herkömmlichen Hartchrombeschichtung. Die Abscheidung erfolgte aus dem Hartchrombad S der Fa. Dr.-Ing. Max Schlötter.

### Der Ansatz enthält:

220 g/l Chromtrioxid
0,75 ml/l Schwefelsäure, chemisch rein, Dichte 1,84 g/cm³
40 ml/l Hartchrombadzusatz S1

Hartchromzusatz S1 ist ein Produkt der Fa. Dr.-Ing. Max Schlötter und enthält 20 % Hexafluorkieselsäure.

### Abscheidebedingungen:

Stromdichte: 50 A/dm²
Abscheidedauer: 10 Minuten
Temperatur: 54°C
Schichtdicke: 10 µm
Eine Härtemessung ergab für die so hergestellte Hartchromschicht einen Wert von 890 HV0,015. Sie weist eine Reibungszahl (Mittelwert) von 0,63228 und eine Verschleißspurtiefe (Mittelwert) von 0,87 µm auf.

### Beispiel 3:

Es wurden auf Kupferblechen analog zu Beispiel 1 Zinn-Nickel-Schichten abgeschieden. Die Bleche wurden zuvor analog zu den Messingblechen vorbehandelt. Es wurden Proben 1 bis 4 bei 200°C, 350°C, 450°C bzw. 550°C für jeweils 3 Stunden unter Argonschutzgasatmosphäre getempert. Im Anschluss wurden Tribologiemessungen durchgeführt. Die Ergebnisse für Härte, Reibung und Verschleiß sind in Tabelle 1 zusammengefasst.

**Tabelle 1:**

| Probe | Temperung | Vickershärte HV0,015 (Mittelwert) | Reibungszahl (Mittelwert) | Verschleißspurtiefe (Mittelwert, µm) |
|---|---|---|---|---|
| 1 | 200°C | 791 | 0,60667 | 5,32 |
| 2 | 350°C | 890 | 0,65222 | 4,13 |
| 3 | 450°C | 859 | 0,51169 | 1,56 |
| 4* | 550°C | 591 | 0,50809 | 4,74 |

| | | | | |
|---|---|---|---|---|
| *Referenzbeispiel, nicht erfindungsgemäß. | | | | |

Beispiel 1 belegt, dass durch Tempern einer abgeschiedenen Zinn-Nickel-Schicht die Härte erheblich erhöht wird. Es werden dabei Vickers-Härten erhalten, die im Bereich von üblichen Hartchromschichten liegen (siehe Vergleichsbeispiel 1). Somit stellt eine erfindungsgemäße Zinn-Nickel-Schicht eine technisch einfach zu realisierende Alternative zu Hartchromschichten dar.

Beispiel 3 zeigt, dass durch das erfindungsgemäße Verfahren mit einem Temperschritt bei 200°C bzw. 350°C bereits signifikant verbesserte Härten beobachtet werden. Eine höhere Temperatur führte dann zu deutlich verbesserten tribologischen Eigenschaften der Zinn-Nickel-Schicht. Dieses Beispiel belegt, dass durch das erfindungsgemäße Verfahren Zinn-Nickel-Schichten mit sehr guten tribologischen Eigenschaften erhalten werden können. Die Temperatur im Temperschritt hat offenbar einen deutlichen Einfluss auf die Reibungszahl der Oberfläche. Es wurde gefunden, dass diese bei steigender Temperatur wieder erniedrigt wird. Eine Erhöhung der Temperungstemperatur von 450°C auf 550°C führte bei diesem Beispiel zu einer Erniedrigung der Härte von 845 bis 950 HV0,015 auf 591 HV0,015. Dies ging auch mit einer Verschlechterung der tribologischen Eigenschaften einher.

## Patentansprüche

1. Zinn-Nickel-Schicht mit einer NiSn-Phase, wobei die Zinn-Nickel-Schicht eine Härte von mindestens HV 750 (Vickers-Härte), und
eine Schichtdicke, bestimmt durch Röntgenfluoreszenzanalyse gemäß DIN EN ISO 3497, von 5 bis 250 µm aufweist.

2. Zinn-Nickel-Schicht nach Anspruch 1, wobei die Zinn-Nickel-Schicht eine Härte im Bereich von HV 800 bis 1050 aufweist.

3. Zinn-Nickel-Schicht nach Anspruch 1 oder 2, wobei in der Zinn-Nickel-Schicht ein Molverhältnis von Nickel zu Zinn von 1:1 vorliegt.

4. Zinn-Nickel-Schicht nach einem der Ansprüche 1 bis 3, wobei die Zinn-Nickel-Schicht auf einem Substrat, das ein Metall und/oder eine Metalllegierung umfasst, aufgebracht ist.

5. Zinn-Nickel-Schicht nach Anspruch 4, wobei das Substrat Stahl, Kupfer oder Messing umfasst.

6. Zinn-Nickel-Schicht nach Anspruch 4 oder 5, wobei das Substrat Kupfer enthält und die Zinn-Nickel-Schicht eine NiCuSn-Phase aufweist.

7. Zinn-Nickel-Schicht nach einem der Ansprüche 4 bis 6, wobei die Zinn-Nickel-Schicht die Endoberflächenschicht auf dem Substrat bildet.

8. Zinn-Nickel-Schicht nach einem der Ansprüche 1 bis 7, wobei die Zinn-Nickel-Schicht eine Schichtdicke von 5 bis 150 µm aufweist.

9. Verfahren zur Herstellung einer Zinn-Nickel-Schicht nach Anspruch 1, umfassend:
(A) galvanisches Abscheiden einer Zinn-Nickel-Schicht mit einer NiSn-Phase und einer Schichtdicke, bestimmt durch Röntgenfluoreszenzanalyse gemäß DIN EN ISO 3497, von 5 bis 250 µm, und
(B) Tempern der abgeschiedenen Zinn-Nickel-Schicht bei mindestens 200°C, sodass die Zinn-Nickel-Schicht eine Härte von mindestens HV 750 aufweist.

10. Verfahren nach Anspruch 9, wobei für mindestens 20 min getempert wird.

11. Verfahren nach Anspruch 9 oder 10, wobei das Tempern bei einer Temperatur von mindestens 380°C und höchstens 750°C erfolgt.

12. Beschichtetes Bauteil, umfassend als Beschichtung eine Zinn-Nickel-Schicht nach einem der Ansprüche 1 bis 8.

13. Beschichtetes Bauteil nach Anspruch 12, wobei die Zinn-Nickel-Schicht die Endoberflächenschicht auf dem Bauteil bildet.

## Claims

1. Tin-nickel layer having an NiSn phase, wherein the tin-nickel layer has a hardness of at least HV 750 (Vickers hardness) and a layer thickness, determined by X-ray fluorescence analysis in accordance with DIN EN ISO 3497, of 5 to 250 µm.

2. Tin-nickel layer according to claim 1, wherein the tin-nickel layer has a hardness in the range from HV 800 to 1050.

3. Tin-nickel layer according to claim 1 or 2, wherein the molar ratio of nickel to tin in the tin-nickel layer is 1:1.

4. Tin-nickel layer according to one of claims 1 to 3, wherein the tin-nickel layer is applied to a substrate comprising a metal and/or a metal alloy.

5. Tin-nickel layer according to claim 4, wherein the substrate comprises steel, copper or brass.

6. Tin-nickel layer according to claim 4 or 5, wherein the substrate contains copper and the tin-nickel layer has an NiCuSn phase.

7. Tin-nickel layer according to one of claims 4 to 6, wherein the tin-nickel layer forms the final surface layer on the substrate.

8. Tin-nickel layer according to one of claims 1 to 7, wherein the tin-nickel layer has a layer thickness of 5 to 150 µm.

9. Method for producing a tin-nickel layer according to claim 1, comprising:
(A) electrodeposition of a tin-nickel layer having an NiSn phase and a layer thickness, determined by X-ray fluorescence analysis in accordance with DIN EN ISO 3497, of 5 to 250 µm, and
(B) annealing of the deposited tin-nickel layer at a temperature of at least 200°C, such that the tin-nickel layer has a hardness of at least HV 750.

10. Method according to claim 9, wherein annealing is carried out for at least 20 min.

11. Method according to claim 9 or 10, wherein annealing is carried out at a temperature of at least 380°C and at most 750°C.

12. Coated component, comprising as the coating a tin-nickel layer according to one of claims 1 to 8.

13. Coated component according to claim 12, wherein the tin-nickel layer forms the final surface coating on the component.

## Revendications

1. Couche d'étain-nickel avec une phase NiSn, dans laquelle la couche d'étain-nickel présente une dureté d'au moins 750 HV (dureté Vickers), et
une épaisseur de couche, déterminée par analyse par fluorescence X selon DIN EN ISO 3497, de 5 à 250 µm.

2. Couche d'étain-nickel selon la revendication 1, dans laquelle la couche d'étain-nickel présente une dureté dans la plage de 800 à 1 050 HV.

3. Couche d'étain-nickel selon la revendication 1 ou 2, dans laquelle dans la couche d'étain-nickel, un rapport molaire du nickel par rapport à l'étain est de 1:1.

4. Couche d'étain-nickel selon l'une quelconque des revendications 1 à 3, dans laquelle la couche d'étain-nickel est appliquée sur un substrat qui comprend un métal et/ou un alliage métallique.

5. Couche d'étain-nickel selon la revendication 4, dans laquelle le substrat comprend de l'acier, du cuivre ou du laiton.

6. Couche d'étain-nickel selon la revendication 4 ou 5, dans laquelle le substrat contient du cuivre et la couche d'étain-nickel présente une phase NiCuSn.

7. Couche d'étain-nickel selon l'une quelconque des revendications 4 à 6, dans laquelle la couche d'étain-nickel forme la couche de surface d'extrémité sur le substrat.

8. Couche d'étain-nickel selon l'une des revendications 1 à 7, dans laquelle la couche d'étain-nickel présente une épaisseur de couche de 5 à 150 µm.

9. Procédé de fabrication d'une couche d'étain-nickel selon la revendication 1, comprenant les étapes consistant à :
(A) électrodéposer une couche d'étain-nickel avec une phase NiSn et une épaisseur de couche, déterminée par analyse par fluorescence X selon la norme DIN EN ISO 3497, de 5 à 250 µm, et
(B) recuire la couche d'étain-nickel déposée à au moins 200°C, de sorte que la couche d'étain-nickel présente une dureté d'au moins 750 HV.

10. Procédé selon la revendication 9, dans lequel le recuit est effectué pendant au moins 20 minutes.

11. Procédé selon la revendication 9 ou 10, dans lequel le recuit est effectué à une température d'au moins 380°C et d'au plus 750°C.

12. Élément revêtu comprenant en tant que revêtement une couche d'étain-nickel selon l'une quelconque des revendications 1 à 8.

13. Élément revêtu selon la revendication 12, dans lequel la couche d'étain-nickel forme la couche de surface d'extrémité sur l'élément.
